# EUROPÄISCHE PATENTSCHRIFT

(11) **EP 2 501 592 B1**
(45) Veröffentlichungstag und Bekanntmachung des Hinweises auf die Patenterteilung: **24.07.2013**
(21) Anmeldenummer: 10779770.6
(22) Anmeldetag: 12.11.2010
(51) Int. Cl.: B60T 8/1761, B60T 8/1763, B60T 8/1755

(54) **VERFAHREN ZUM BETREIBEN EINER BREMSANLAGE SOWIE ENTSPRECHENDES STEUERGERÄT**
METHOD FOR OPERATING A BRAKE SYSTEM AND CORRESPONDING CONTROLLER
PROCÉDÉ PERMETTANT DE FAIRE FONCTIONNER UN SYSTÈME DE FREINAGE AINSI QU'APPAREIL DE COMMANDE CORRESPONDANT

(30) Priorität: 20.11.2009 DE 102009046942
(43) Veröffentlichungstag der Anmeldung: 26.09.2012
(73) Patentinhaber: Robert Bosch GmbH, 70442 Stuttgart (DE)
(72) Erfinder: STREHLE, Alfred, 70736 Fellbach (DE); EISELE, Achim, Hessigheim 74394 (DE); DIEHLE, Stefan, 70825 Korntal-Muenchingen (DE)
(86) Internationale Anmeldenummer: PCT/EP2010/067357
(87) Internationale Veröffentlichungsnummer: WO 2011/061124

(56) Entgegenhaltungen:
- EP-A2- 0 330 064
- EP-A2- 1 982 886
- DE-A1- 19 511 152
- DE-A1- 19 546 363
- DE-A1- 19 643 179
- DE-A1- 19 752 061
- FR-A1- 2 539 687
- GB-A- 2 135 413
- US-A1- 2007 029 875

## Beschreibung

Die Erfindung betrifft ein Verfahren zum Betreiben einer Bremsanlage eines Fahrzeugs mit mindestens einem bremsbaren Rad, wobei eine eine Bremskraft repräsentierende Bremskraftgröße einer dem Rad zugeordneten Bremseinrichtung bei einem Bremsvorgang bis zum Erkennen einer Blockierneigung des Rads erhöht und dann auf einen bestimmten Wert verringert wird. Die Erfindung betrifft weiterhin ein entsprechendes Steuergerät. Derartige Verfahren (und entsprechende Steuergeräte) sind beispielsweise aus den DE 19546363 A1, US 2007/0029875 A1 und GB 2135413 A bekannt.

### Stand der Technik

Verfahren der eingangs genannten Art sind aus dem Stand der Technik bekannt. Mittels solcher Verfahren soll verhindert werden, dass das Rad auf einem Untergrund des Fahrzeugs derart blockiert, dass der Schlupf des Rads über einen bestimmten Wert steigt, ab welcher die Blockierneigung auftritt. Auf diese Weise soll zum Einen verhindert werden, dass das Rad (zu weit) in den Bereich der Gleitreibung gerät und zum Anderen soll das Fahrzeug weiterhin steuerbar bleiben. Letzteres ist nicht der Fall, wenn das blockierende Rad zum Lenken des Fahrzeugs verwendet wird, weil in diesem Fall keine Seitenführungskräfte auf den Untergrund übertragen werden können. Daher soll bei dem Bremsvorgang des Fahrzeugs, welcher beispielsweise von einem Fahrer des Fahrzeugs oder einem Fahrerassistenzsystem eingeleitet wird, die an der Bremseinrichtung eingestellte Bremskraftgröße erhöht werden, bis die Blockierneigung erkannt wird. Die Blockierneigung liegt dabei vor, wenn der Schlupf des Rads einen bestimmten Grenzwert überschreitet. Zu diesem Zweck können dem Rad Mittel zur Bestimmung von dessen Drehzahl zugeordnet sein und diese mit einer Referenzgeschwindigkeit des Fahrzeugs beziehungsweise einer Referenzdrehzahl verglichen werden. Nach dem Erkennen der Blockierneigung wird die Bremskraftgröße auf den bestimmten beziehungsweise vorbestimmten Wert verringert. Dieser ist beispielsweise gleich Null oder entspricht einer Bremskraftgröße, bei welcher die Blockierneigung nicht mehr vorliegt beziehungsweise festgestellt wird. Die Bremsanlage des Fahrzeugs ist also eine ABS-Bremsanlage. Sie verfügt daher üblicherweise über eine ABS-Steuereinrichtung, welche als Regler ausgeführt sein kann. Die Bremskraftgröße kann beispielsweise unmittelbar die eingestellte Bremskraft oder alternativ ein Bremsdruck, ein Bremsschlupf oder dergleichen sein.

Dieser Regler kann beispielsweise nach dem Optimizer-Prinzip arbeiten. Diese werden häufig auch als Instabilitätsregler bezeichnet. Diese stellen die an dem Rad angreifende Bremskraftgröße derart ein, dass die vorstehend beschriebene Abfolge aus Erhöhen der Bremskraftgröße bis zum Erkennen der Blockierneigung und Verringern auf den bestimmten Wert realisiert ist. Dabei wird das Maximum einer µ-Schlupf-Kurve zyklisch überfahren und somit die Bremskraftgröße des Rads einem Maximum angenähert. Die µ-Schlupf-Kurve ist dabei eine Kurve, welcher den Verlauf des Reibungskoeffizienten µ über dem Schlupf des Rads beschreibt. Die µ-Schlupf-Kurve ist daher sowohl abhängig von dem Rad als auch von dem Untergrund des Fahrzeugs sowie von Umgebungsbedingungen (Temperatur, Feuchtigkeit und dergleichen).

Regler für eine Hinterachse des Fahrzeugs, welche nach dem Optimizer-Prinzip arbeiten, werden häufig zusätzlich mit einer Select-Low- beziehungsweise einer Druckdifferenz-Regelung überlagert, um an der Hinterachse die Seitenkraftreserven für eine Seitenführung des Fahrzeugs (Fahrstabilität) in einem zulässigen Bereich zu halten. Bei der Select-Low-Regelung bestimmt das Rad mit der größten Blockierneigung eine gemeinsame Bremskraftgröße der der Hinterachse zugeordneten Räder. Jedes der Räder weist also die Mittel zur Bestimmung der Drehzahl und die Bremseinrichtung auf, wobei die an dieser eingestellte Bremskraftgröße für alle Räder der Hinterachse gleich ist.

Ebenfalls bekannt sind Regler, welche nach dem Schlupfregelprinzip arbeiten, also den Schlupf des Rads auf einen bestimmten Wert einstellen. Ein solcher Regler benötigt eine sehr genaue Referenzgeschwindigkeit, welche jedoch lediglich mit Hilfe von Zusatzsensorik mit ausreichender Genauigkeit bestimmt werden kann. Diese Zusatzsensorik muss zusätzlich zu dem Mittel zur Bestimmung der Drehzahl des Rads vorgesehen sein. Nachteilig bei den vorstehend beschriebenen Vorgehensweisen ist es, dass entweder die Zusatzsensorik benötigt wird, oder, bedingt durch starke zyklische Differenzdrücke oder sehr starke Bremskraftgrößenschwankungen, der Fahrkomfort für den Fahrer des Fahrzeugs verringert wird.

### Offenbarung der Erfindung

Demgegenüber weist das Verfahren mit den in Anspruch 1 genannten Merkmalen den Vorteil auf, dass keine Zusatzsensorik zur Bestimmung der Referenzgeschwindigkeit benötigt wird beziehungsweise der Fahrkomfort für Insassen des Fahrzeugs erhöht wird. Dies wird erfindungsgemäß erreicht, indem die Bremskraftgröße nachfolgend auf eine Sollbremskraftgröße, die einem wählbaren Anteil der bei dem Erkennen der Blockierneigung vorliegenden Bremskraftgröße entspricht, für eine bestimmte Zeitspanne eingestellt wird. Nach dem Verringern der Bremskraftgröße auf den bestimmten Wert soll sie also auf die Sollbremskraftgröße eingestellt werden. Dazu wird die bei dem Erkennen der Blockierneigung vorliegende Bremskraftgröße gespeichert. Die Sollbremskraftgröße entspricht einem wählbaren Anteil dieser Bremskraftgröße. Die Sollbremskraftgröße wird über die bestimmte Zeitspanne an der Bremseinrichtung steuernd und/oder regelnd eingestellt. Das bedeutet, dass das Rad durch das Erhöhen der Bremskraftgröße zunächst in einen instabilen. Bereich gebracht wird, in welchem die Blockierneigung auftritt. Die Blockierneigung kann beispielsweise anhand einer Verzögerung und/oder eines Schlupfs des Rads erkannt werden. Anschließend wird die Bremskraftgröße auf den bestimmten Wert verringert, bei welchem die Blockierneigung verringert ist beziehungsweise nicht mehr vorliegt. Bei aus dem Stand der Technik bekannten Reglern, welche nach dem Optimizer-Prinzip arbeiten, wird dies für jedes bremsbare Rad des Fahrzeugs durchgeführt. Die Bremskraftgröße wird dabei zyklisch solange erhöht, bis eine starke Radreaktion die ansteigende Blockierneigung anzeigt. Anschließend erfolgt ein schneller Abbau der Bremskraftgröße, welche das Rad wieder in einen stabilen Bereich der µ-Schlupf-Kurve bringt, in welchem die Blockierneigung verringert ist beziehungsweise nicht mehr vorliegt. Anschließend wird der nächste Regelzyklus eingeleitet, die Bremskraftgröße also wieder bis zum Erkennen der Blockierneigung erhöht.

Dabei ist es üblich, das Einstellen der Bremskraftgröße nicht zu niederfrequent und nicht gleichphasig, also wechselphasig, durchzuführen. Wird das Einstellen jedoch wechselphasig für Räder einer Achse des Fahrzeugs durchgeführt, so kommt es bei einem Untergrund des Fahrzeugs, welcher eine bestimmte µ-Schlupf-Charakteristik aufweist (sehr spitzer Verlauf des Maximums der µ-Schlupf-Kurve) zu starken zyklischen Bremskraftgrößendifferenzen zwischen den Rädern der Achse (bei Wechselphasigkeit). Bei Gleichphasigkeit treten dagegen starke Schwankungen der Bremskraftgröße auf. Beides wird von dem Fahrer des Fahrzeugs beziehungsweise von Insassen des Fahrzeugs gleichermaßen als unkomfortabel empfunden. Mittels des erfindungsgemäßen Verfahrens können solche Schwankungen in der Bremskraftgröße beziehungsweise die Bremskraftgrößendifferenzen reduziert werden, wobei gleichzeitig die Bremsleistung des Rads beziehungsweise des Fahrzeugs möglich ist und eine zuverlässige Bestimmung der Referenzgeschwindigkeit des Fahrzeugs zulässt. Der Zyklus zum Einstellen der Bremskraftgröße des Rads wird dazu um den Schritt ergänzt, in welchem die Sollbremskraftgröße für die bestimmte Zeitspanne an der Bremseinrichtung eingestellt wird. Das bedeutet, dass die Bremskraftgröße zunächst bis zum Erkennen der Blockierneigung erhöht und dann auf den bestimmten Wert verringert wird und nachfolgend die Bremskraftgröße auf die Sollbremskraftgröße eingestellt wird. Nachfolgend beginnt ein neuer Zyklus, das heißt die Bremskraftgröße wird erneut bis zum Erkennen der Blockierneigung erhöht. Auf diese Weise wird eine "oszillierende" Änderung der Bremskraftgröße durch das Einhalten der Bremskraftgröße für die bestimmte Zeitspanne zumindest unterbrochen, sodass keine Schwingungen des Rads beziehungsweise der Achse angeregt werden. Durch das Halten der Bremskraftgröße auf der Sollbremskraftgröße sinkt die Bremsleistung nicht ab. Im Gegenteil wird die mittlere Bremsleistung des Fahrzeugs im Normalfall sogar erhöht. Ebenso kann durch die gesteuerte und/oder geregelte Haltephase auf der Sollbremskraftgröße die Bestimmung der Referenzgeschwindigkeit vereinfacht werden.

Die Erfindung sieht vor, dass das Erhöhen und Verringern der Bremskraftgröße für eines der Räder durchgeführt wird, während die Bremskraftgröße für ein anderes der Räder auf die Sollbremskraftgröße eingestellt ist. Das Erhöhen und Verringern der Bremskraftgröße ist dabei einer Kalibrierungsphase und das Halten der Bremskraftgröße auf der Sollbremskraftgröße einer Haltephase zugeordnet. Es ist nun vorgesehen, dass die Kalibrierungsphase für das eine Rad abläuft, während sich das andere Rad in der Haltephase befindet. In der Haltephase wird das mit der Sollbremskraftgröße beaufschlagte Rad im stabilen Bereich der µ-Schlupf-Kurve gehalten, wobei die Sollbremskraftgröße vorzugsweise im Wesentlichen einer maximal möglichen Bremskraftgröße entspricht, bei welcher dies gerade noch der Fall ist. Gleichzeitig wird für das eine Rad die Kalibrierungsphase durchgeführt, das heißt die Sollbremskraftgröße ermittelt, welche in der nachfolgenden Haltephase an dem einen Rad eingestellt werden soll. Ist die Kalibrierungsphase für das eine Rad abgeschlossen, so wird für dieses die Haltephase durchgeführt, während für das andere Rad die Kalibrierungsphase beginnt. Damit werden Schwankungen der Bremskraftgröße zwischen den Rädern verringert, wodurch der Fahrkomfort des Fahrzeugs deutlich erhöht wird. Bedingt durch die Haltephase ergibt sich eine Verringerung der Frequenz, mit welcher das Einstellen der Bremskraftgröße durchgeführt wird. Daraus ergibt sich eine Verringerung des Volumendurchsatzes der Bremsflüssigkeit, da diese bei dem Verringern der Bremskraftgröße üblicherweise aus der Bremseinrichtung in einen Speicher unter Abbau von Druck abgelassen wird. Die Bremsflüssigkeit muss anschließend aus dem Speicher von einer Pumpe (Rückförderpumpe) zurück in einen Hauptbremszylinder der Bremsanlage gefördert werden. Durch die Reduzierung der Frequenz beziehungsweise der Reduzierung des Volumendurchsatzes fällt eine Bewegung des Bremspedals geringer aus (erhöhter Pedalkomfort). Weiterhin kann die Drehzahl der Pumpe, mit welcher die Bremsflüssigkeit von dem Speicher in dem Hauptbremszylinder gefördert wird, gesenkt werden (geringere Geräuschentwicklung) oder sogar eine kleinere und damit günstigere Pumpe, insbesondere Pumpenmotor, vorgesehen werden.

Eine Weiterbildung der Erfindung sieht vor, dass das Fahrzeug mindestens zwei, insbesondere an einer gemeinsamen Achse vorgesehene, bremsbare Räder aufweist. Das Verfahren ist besonders vorteilhaft anwendbar, wenn mehrere Räder vorliegen. Diese können beispielsweise an der gemeinsamen Achse vorliegen. Bei einem solchen Aufbau des Fahrzeugs können die Bremskräfte, welche auf die bremsbaren Räder mittels der Bremseinrichtung aufgebracht werden, miteinander synchronisiert sein, sodass der Fahrkomfort des Fahrzeugs weiter erhöht wird.

Eine Weiterbildung der Erfindung sieht vor, dass das Erhöhen und Verringern der Bremskraftgröße für das eine Rad zeitversetzt oder unmittelbar nach dem Einstellen der Sollbremskraftgröße für das andere Rad beginnt. Befindet sich das andere Rad in der Haltephase, so kann die Kalibrierungsphase für das eine Rad unmittelbar nach deren Beginn gestartet werden. Es kann jedoch auch vorgesehen sein, dass zunächst eine Wartezeitspanne abläuft und somit die Kalibrierungsphase zeitversetzt nach dem Beginn der Haltephase gestartet wird.

Eine Weiterbildung der Erfindung sieht vor, dass das Erhöhen und Verringern der Bremskraftgröße für das eine Rad auch dann durchgeführt wird, wenn die bestimmte Zeitspanne und/oder eine Maximalzeitspanne überschritten sind und/oder die Blockierneigung festgestellt wird und/oder eine entsprechende Anforderung vorliegt. Die Kalibrierungsphase, bestehend aus Erhöhen und Verringern der Bremskraftgröße, für das eine Rad soll in einigen Fällen auch dann durchgeführt werden, wenn sich das andere Rad nicht in der Haltephase befindet, also die Brennkraft (noch) nicht auf die Sollbremskraftgröße eingestellt ist. Dies ist insbesondere dann der Fall, wenn die bestimmte Zeitspanne der Haltephase für das Rad überschritten ist. Alternativ kann auch vorgesehen sein, dass wenn die bestimmte Zeitspanne abgelaufen ist, sich das andere Rad jedoch noch nicht in der Haltephase befindet, die bestimmte Zeitspanne entsprechend verlängert wird, bis die Sollbremskraftgröße für das andere Rad eingestellt ist. Dies ist jedoch nur bis zum Ablauf einer Maximalzeitspanne vorgesehen. Ist diese überschritten, so wird die Kalibrierungsphase für das eine Rad gestartet. Dies kann ebenfalls dann vorgesehen sein, wenn in der Haltephase des einen Rads dessen Blockierneigung erkannt wird. Das bedeutet, dass sich beispielsweise der Untergrund des Fahrzeugs derart verändert hat, dass bei dem Einstellen der Sollbremskraftgröße das Rad blockiert oder zumindest die Blockierneigung aufweist. Wird dies festgestellt, wird unmittelbar die Kalibrierungsphase eingeleitet, also die Bremskraftgröße bis zum Erkennen der Blockierneigung erhöht und anschließend auf den bestimmten Wert verringert. Dabei kann es jedoch auch vorgesehen sein, dass das Erhöhen der Bremskraftgröße in diesem Fall entfällt, da die Blockierneigung bereits in der Haltephase festgestellt wurde. Alternativ oder zusätzlich kann die Kalibrierungsphase für das eine Rad auch dann eingeleitet werden, wenn die Anforderung vorliegt. Die Anforderung kann beispielsweise einen Sonderzustand signalisieren und/oder von einer Fahrerassistenzvorrichtung, wie beispielsweise einem ESP- oder ASR-System, initiiert sein. Die Anforderung kann demnach vorliegen, wenn die Fahrerassistenzvorrichtung feststellt, dass das Fahrzeug instabil ist, sodass eine Erhöhung der Frequenz, mit welcher die Bremskraftgröße an dem Rad eingestellt wird, notwendig ist. In diesem Fall wird die Haltephase abgebrochen und unmittelbar die Kalibrierungsphase für das eine Rad durchgeführt.

Eine Weiterbildung der Erfindung sieht vor, dass die Blockierneigung anhand einer Referenzdrehzahl bestimmt wird, die der durchschnittlichen Drehzahl des Rads und/oder mindestens eines weiteren Rads entspricht. Mittels der Referenzdrehzahl wird auf den Schlupf des Rads geschlossen. Die Referenzdrehzahl entspricht dabei beispielsweise einer Referenzgeschwindigkeit des Fahrzeugs. Sie wird aus der durchschnittlichen Drehzahl mindestens eines Rads des Fahrzeugs bestimmt, wobei das bremsbare Rad oder weitere Räder des Fahrzeugs herangezogen werden können.

Eine Weiterbildung der Erfindung sieht vor, dass der Anteil im Bereich von 10 % bis 100 %, bevorzugt 25 % bis 75 %, besonders bevorzugt 50 %, gewählt wird. Der Anteil muss dabei nicht fest gewählt sein, sondern kann entsprechend bestimmter Einflussgrößen angepasst werden. Der Anteil bestimmt die Größe der Sollbremskraftgröße auf Grundlage der bei dem Erkennen der Blockierneigung vorliegenden Bremskraftgröße während der Kalibrierungsphase des Rads. Ein Anteil von 100 % kann gewählt werden, wenn bei einem Erhöhen der Bremskraftgröße bis zu einer Maximalbremskraftgröße der Bremseinrichtung keine Blockierneigung des Rads erkannt wird. Wird dagegen die Blockierneigung erkannt, so ist es sinnvoll, den Anteil kleiner als 100 % zu wählen, um bei dem nachfolgenden Einstellen der Bremskraftgröße auf die Sollbremskraftgröße, also in der Haltephase, das Auftreten der Blockierneigung des Rads zu vermeiden. Üblicherweise wird der Anteil mit 50 % gewählt. Es ist jedoch auch eine Variabilität des Anteils vorgesehen, wobei der Anteil in Abhängigkeit von Einflussgrößen wie beispielsweise Temperatur, Geschwindigkeit des Fahrzeugs, Blockierneigung weiterer Räder des Fahrzeugs und dergleichen gewählt.

Eine Weiterbildung der Erfindung sieht vor, dass der Anteil vergrößert wird, wenn bei einem auf das Einstellen der Sollbremskraftgröße folgenden Erhöhen der Bremskraftgröße festgestellt wird, dass der Abstand zwischen der Sollbremskraftgröße und der Bremskraftgröße, bei welcher die Blockierneigung festgestellt wird, über einem Maximalwert liegt und/oder dass der Anteil verkleinert wird, wenn der Abstand unter einem Minimalwert liegt. Der Anteil soll also ausgehend von einem vorherigen Wert des Anteils verändert werden. In der Haltephase ist die Bremskraftgröße auf die Sollbremskraftgröße eingestellt. Nachfolgend wird die Kalibrierungsphase für das Rad durchgeführt, also die Bremskraftgröße erhöht, bis die Blockierneigung festgestellt wird. Wird bei dem Erhöhen der Bremskraftgröße festgestellt, dass der Abstand beziehungsweise die Differenz zwischen Sollbremskraftgröße und der Bremskraftgröße, bei welcher die Blockierneigung auftritt, größer ist als ein Maximalwert, so wird der Anteil um einen bestimmten Wert vergrößert. Der Wert wird dabei derart festgelegt, dass die Sollbremskraftgröße für die nächste Haltephase unter der Bremskraftgröße liegt, bei welcher in der Kalibrierungsphase die Blockierneigung festgestellt wurde. Alternativ oder zusätzlich kann der Anteil verkleinert werden, wenn der Abstand beziehungsweise die Differenz unter einem Minimalwert liegt. Das Verkleinern erfolgt dabei beispielsweise um einen festgelegten Wert. Ebenso kann der Anteil verkleinert werden, wenn die Blockierneigung des Rads bereits während der Hal- . tephase festgestellt wurde.

Eine Weiterbildung der Erfindung sieht vor, dass die Zeitspanne entsprechend einer gewünschten Seitenführungskraft des Fahrzeugs gewählt und/oder bei verringerter Blockierneigung kleiner gewählt wird. Durch eine Verlängerung der Zeitspanne kann die Seitenführungskraft des Fahrzeugs vergrößert werden. Es kann also in bestimmten Fahrzuständen des Fahrzeugs sinnvoll sein, die Zeitspanne zu vergrößern, beispielsweise während einer Kurvenfahrt des Fahrzeugs. Das Einstellen beziehungsweise Wählen der Zeitspanne kann ausgehend von einer Fahrerassistenzvorrichtung vorgesehen sein. Sobald diese feststellt, dass die Vergrößerung der Seitenführungskraft gewünscht beziehungsweise notwendig ist, kann sie die Zeitspanne entsprechend anpassen. Ebenso ist es möglich, die Bremsleistung des Rads beziehungsweise des Fahrzeugs zu erhöhen, indem die Zeitspanne kleiner gewählt wird, wenn eine verringerte Blockierneigung des Rads festgestellt wird. Somit kann die Bremskraftgröße des Rads schnell an steigende Reibungswerte zwischen Untergrund und Rad angepasst werden. Die Zeitspanne kann dabei selbstverständlich auch abhängig von einer Blockierneigung weiterer Räder des Kraftfahrzeugs gewählt sein.

Die Erfindung betrifft weiterhin ein Steuergerät einer Bremsanlage eines Fahrzeugs, insbesondere zur Umsetzung des Verfahrens gemäß den vorstehenden Ausführungen, wobei die Bremsanlage mindestens ein bremsbares Rad aufweist und das Steuergerät dazu vorgesehen ist, eine eine Bremskraft repräsentierende Bremskraftgröße einer dem Rad zugeordneten Bremseinrichtung bei einem Bremsvorgang bis zum Erkennen einer Blockierneigung des Rads zu erhöhen und dann auf einen bestimmten Wert zu verringern. Dabei ist das Steuergerät außerdem dazu vorgesehen, die Bremskraftgröße nachfolgend auf eine Sollbremskraftgröße, die einen wählbaren Anteil der bei dem Erkennen der Blockierneigung vorliegenden Bremskraftgröße entspricht, für eine bestimmte Zeitspanne einzustellen. Die Bremsanlage ist dabei vorzugsweise eine ABS-Bremsanlage, weist also Mittel auf, um die Bremskraftgröße unabhängig von einer von dem Fahrer vorgegebenen Bremskraftgröße einzustellen.

Die Erfindung betrifft auch eine entsprechende Bremsanlage eines Fahrzeugs, insbesondere zur Umsetzung des Verfahrens gemäß den vorstehenden Ausführungen und/oder mit einem wie vorstehend beschrieben ausgebildeten Steuergerät.

Die Erfindung wird im Folgenden anhand der in der Zeichnung dargestellten Ausführungsbeispiele näher erläutert, ohne dass eine Beschränkung der Erfindung erfolgt. Es zeigt die
- Figur 1: eine schematische Ansicht eines Fahrzeugs, und
- Figur 2: ein Diagramm, in welchem Bremsdrücke p₁ und p₂ zweier Räder einer Achse eines Fahrzeugs über der Zeit t dargestellt sind.

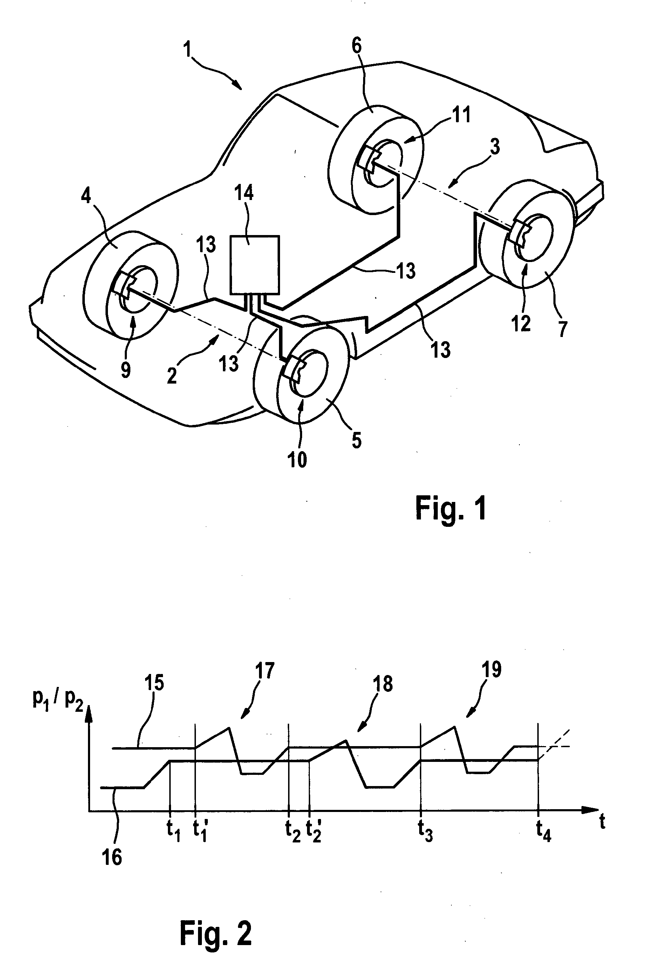

Die Figur 1 zeigt eine schematische Ansicht eines Fahrzeugs 1. Das Fahrzeug verfügt über zwei Achsen 2 und 3, wobei jede der Achsen 2 und 3 zwei Räder 4 und 5 beziehungsweise 6 und 7 aufweist. Das Fahrzeug 1 verfügt über eine Bremsanlage. Diese besteht aus Bremseinrichtungen 9, 10, 11 und 12, welche jeweils den Rädern 4, 5, 6 und 7 zugeordnet sind. Diese sind über Leitungen 13 mit einer Steuerungs- und/oder Regelungseinrichtung 14 verbunden. Diese kann jedes der Räder 4 bis 7 mit einer eine Bremskraft repräsentierenden Bremskraftgröße beaufschlagen, wozu in den Bremseinrichtungen 9 bis 12 jeweils ein Bremsdruck p aufgebaut wird.

Die Figur 2 zeigt ein Diagramm, wobei Bremsdrücke p₁ und p₂ über der Zeit t aufgetragen sind. Dabei sind die Bremsdrücke p₁ und p₂ beispielhaft den Rädern 4 und 5 der Achse 2 zugeordnet. Ein erster Verlauf 15 zeigt den Bremsdruck p₁ des Rads 4 eines Fahrzeugs 1. Entsprechend stellt ein zweiter Verlauf 2 den Bremsdruck p₂ des Rad 5 des Fahrzeugs 1 dar, wobei beide Räder 4 und 5 an der gemeinsamen Achse 2 vorgesehen sind und mit der ihnen jeweils zugeordneten Bremseinrichtung 9 und 10 bremsbar sind. Wird ein Bremsvorgang des Fahrzeugs 1, beispielsweise durch einen Fahrer des Fahrzeugs 1, eingeleitet, so ist es vorgesehen, die Bremskraftgröße jedes Rads 4 oder 5 (beziehungsweise 4, 5, 6 oder 7) bis zum Erkennen einer Blockierneigung des jeweiligen Rads 4 oder 5 zu erhöhen und anschließend auf einen bestimmten Wert zu verringern. Nachfolgend soll die Bremskraftgröße jedes Rads 4 oder 5 auf eine Sollbremskraftgröße eingestellt werden, die einen wählbaren Anteil der bei dem Erkennen der Blockierneigung vorliegenden Bremskraftgröße entspricht. Dieses Einstellen erfolgt für eine bestimmte Zeitspanne. Die Phase, in welcher das Erhöhen und Verringern der Bremskraftgröße erfolgt, wird dabei als Kalibrierungsphase und die Phase, in welcher die Bremskraftgröße auf die Sollbremskraftgröße eingestellt ist, als Haltephase bezeichnet.

In dem Diagramm der Figur sind drei Zeiträume 17, 18 und 19 erkennbar, wobei der Zeitraum 17 für t₁ ≤ t < t₂, der Zeitraum 18 für t₂ ≤ t < t₃ und der Zeitraum 19 für t_{3 ≤} t < t₄ vorliegt. In dem Zeitraum 17 befindet sich das Rad 4 (erster Verlauf 15) erkennbar in der Kalibrierungsphase, und das Rad 5 (zweiter Verlauf 16) in der Haltephase. Dies gilt ebenso für den Zeitraum 19, wohingegen in dem Zeitraum 18 das Rad 4 in der Haltephase und das Rad 5 in der Kalibrierungsphase vorliegt. Die hier dargestellten Bremsdrücke p₁ und p₂ korrespondieren unmittelbar mit der Bremskraftgröße des jeweiligen Rads 4 oder 5. Der Bremsdruck beziehungsweise die Bremskraftgröße wird dabei an der dem Rad 4 oder 5 zugeordneten Bremseinrichtung 9 oder 10 steuernd und/oder regelnd eingestellt. In dem Zeitraum 17 ist erkennbar, dass die Kalibrierungsphase des Rads 4 zeitversetzt, nämlich zu einem Zeitpunkt t'₁ > t₁, eingeleitet wird, an welchem sich das Rad 5 bereits in der Kalibrierungsphase - welche bei t₁ beginnt - befindet.

In der Kalibrierungsphase wird der Bremsdruck zunächst erhöht, bis die Blockierneigung des Rads 4 festgestellt wird. Anschließend wird er auf den bestimmten Wert verringert. Es sei darauf hingewiesen, dass die in dem Diagramm dargestellten Werte lediglich rein beispielhaft sind und auch ihre Verhältnisse zueinander keinen Aufschluss über den tatsächlichen Bremsdruck beziehungsweise die tatsächliche Bremskraftgröße zulassen. In der Kalibrierungsphase wird der Bremsdruck, bei welchem die Blockierneigung des Rads 4 erkannt wird, abgespeichert und anschließend unter Einbeziehung eines wählbaren Anteils die Sollbremskraftgröße bestimmt. Diese Sollbremskraftgröße wird in der nachfolgenden Haltephase für das eine Rad eingestellt (Zeitraum 18).

In dem Zeitraum 18 beginnt die Kalibrierungsphase des Rads 5 ebenso zeitversetzt, nämlich zu einem Zeitpunkt t'₂ > t₂. Gleichzeitig befindet sich das Rad 4 in der Haltephase, die Bremskraftgröße beziehungsweise der Bremsdruck entspricht also der Sollbremskraftgröße. Dabei entsprechen die Zeiträume 17, 18 und 19 jeweils der bestimmten Zeitspanne, für welche die Sollbremskraftgröße an der Bremseinrichtung 9 oder 10 steuernd und/oder regelnd eingestellt wird. Das bedeutet jedoch nicht, dass die Zeitspanne, wie in dem Diagramm der Figur dargestellt, eine konstante Länge beziehungsweise Dauer aufweisen muss. Es ist durchaus vorgesehen, die Zeitspanne variabel zu wählen, beispielsweise aufgrund von Einflussgrößen wie Betriebs- beziehungsweise Fahrzustand des Fahrzeugs 1, Temperatur, Sollbremskraftgröße und dergleichen.

In dem Zeitraum 19 ist ein leicht unterschiedlicher Ablauf vorgesehen, hier beginnt die Kalibrierungsphase des Rads 4 gleichzeitig mit der Haltephase des Rads 5, also unmittelbar nach dem Einstellen der Sollbremskraftgröße für das Rad 5.

Über die Länge der bestimmten Zeitspanne und dem wählbaren Anteil, mittels welchem die Sollbremskraftgröße bestimmt wird, kann gewählt werden, ob das jeweilige Rad 4, 5, 6 oder 7 zur Vergrößerung der Seitenführungskraft und/oder zur Optimierung der Bremsleistung des Fahrzeugs 1 eingesetzt werden soll. Ebenso kann die Bestimmung der Referenzdrehzahl beziehungsweise der Referenzgeschwindigkeit des Fahrzeugs 1 unterstützt werden. Letztere kann umso genauer bestimmt werden, umso länger die bestimmte Zeitspanne ist, in welcher davon ausgegangen werden kann, dass das Rad 4, 5, 6, oder 7 keine Blockierneigung aufweist. Das Fahrzeug 1 beziehungsweise die Bremsanlage 8 kann also derart eingestellt werden, dass es einem Lenk- beziehungsweise Bremswunsch des Fahrers des Kraftfahrzeugs 1 optimal folgen kann. Dabei kann eine gezielte Optimierung der genannten Parameter erfolgen, wozu beispielsweise ein lernfähiger Algorithmus eingesetzt wird. Dabei kann es vorgesehen sein, dass beispielsweise eine Fahrerassistenzvorrichtung (zum Beispiel ein ESP- oder ASR-System) vorausschauend ermittelt, ob eine Erhöhung der Seitenführungskraft oder eine Optimierung der Bremsleistung des Fahrzeugs 1 notwendig ist. Entsprechend kann der wählbare Anteil und die bestimmte Zeitspanne eingestellt beziehungsweise gewählt werden. Mittels des lernfähigen Algorithmus' ist es dabei auch möglich, dass die Bremsanlage sich selbsttätig beziehungsweise lernend auf Anforderungen des Fahrers des Fahrzeugs 1 einstellt.

## Patentansprüche

1. Verfahren zum Betreiben einer Bremsanlage eines Fahrzeugs (1) mit mindestens einem bremsbaren Rad (4, 5, 6, 7), wobei eine eine Bremskraft repräsentierende Bremskraftgrösse einer dem Rad ( 4 , 5 , 6 , 7 ) zugeordneten Bremseinrichtung ( 9 , 10 , 11, 12 ) bei einem Bremsvorgang bis zum Erkennen einer Blockierneigung des Rads ( 4, 5, 6, 7) erhöht und dann auf einen bestimmten Wert verringert wird, **dadurch gekennzeichnet, dass** die Bremskraftgrösse nachfolgend auf eine Sollbremskraftgrösse, die einem wählbaren Anteil der bei dem Erkennen der Blockierneigung vorliegenden Bremskraftgrösse entspricht, für eine bestimmte Zeitspanne eingestellt wird und wobei das Erhöhen und Verringern der Bremskraftgrösse für eines der Räder (4, 5; 6 , 7) durchgeführt wird, während die Bremskraftgrösse für ein anderes der Räder (5 , 4 ; 7 , 6) auf die Sollbremskraftgrösse eingestellt ist.

2. Verfahren nach Anspruch 1, **dadurch gekennzeichnet, dass** das Fahrzeug ( 1) mindestens zwei, insbesondere an einer gemeinsamen Achse (2, 3) vorgesehene, bremsbare Räder (4, 5; 6, 7) aufweist.

3. Verfahren nach einem der vorhergehenden Ansprüche, **dadurch gekennzeichnet, dass** das Erhöhen und Verringern der Bremskraftgrösse für das eine Rad (4 , 5 ; 6 , 7) zeitversetzt oder unmittelbar nach dem Einstellen der Sollbremskraftgrösse für das andere Rad (5 4 ; 7 , 6) beginnt.

4. Verfahren nach einem der vorhergehenden Ansprüche, **dadurch gekennzeichnet, dass** das Erhöhen und Verringern der Bremskraftgrösse für das eine Rad (4 , 5 ; 6 , 7) auch dann durchgeführt wird, wenn die bestimmte Zeitspanne und/oder eine Maximalzeitspanne überschritten sind und/oder die Blockierneigung festgestellt wird und/oder eine entsprechende Anforderung vorliegt.

5. Verfahren nach einem der vorhergehenden Ansprüche, **dadurch gekennzeichnet, dass** die Blockierneigung anhand einer Referenzdrehzahl bestimmt wird, die der durchschnittlichen Drehzahl des Rads (4, 5, 6, 7) und/oder mindestens eines weiteren Rads (4, 5, 6, 7) entspricht.

6. Verfahren nach einem der vorhergehenden Ansprüche, **dadurch gekennzeichnet, dass** der Anteil im Bereich von 10% bis 100%, bevorzugt 25% bis 75%, besonders bevorzugt 50%, gewählt wird.

7. Verfahren nach einem der vorhergehenden Ansprüche, **dadurch gekennzeichnet, dass** der Anteil vergrössert wird, wenn bei einem auf das Einstellen der Sollbremskraftgrösse folgenden Erhöhen der Bremskraftgrösse festgestellt wird, dass der Abstand zwischen der Sollbremskraftgrösse und der Bremskraftgrösse, bei welcher die Blockierneigung festgestellt wird, über einem Maximalwert liegt und/oder dass der Anteil verkleinert wird, wenn der Abstand unter einem Minimalwert liegt.

8. Verfahren nach einem der vorhergehenden Ansprüche, **dadurch gekennzeichnet, dass** die Zeitspanne entsprechend einer gewünschten Seitenführungskraft des Fahrzeugs (1) gewählt und/oder bei verringerter Blockierneigung kleiner gewählt wird.

9. Steuergerät einer Bremsanlage eines Fahrzeugs (1), insbesondere zur Umsetzung des Verfahrens nach einem oder mehreren der vorhergehenden Ansprüche, wobei die Bremsanlage (8) mindestens ein bremsbares Rad (4, 5, 6, 7) aufweist und das Steuergerät dazu vorgesehen ist, eine eine Bremskraft repräsentierende Bremskraftgrösse einer dem Rad (4, 5, 6, 7) zugeordneten Bremseinrichtung (9, 10 , 11, 12) bei einem Bremsvorgang bis zum Erkennen einer Blockierneigung des Rads (4 , 5 , 6 , 7) zu erhöhen und dann auf einen bestimmten Wert zu verringern, **dadurch gekennzeichnet, dass** das Steuergerät ausserdem dazu vorgesehen ist, die Bremskraftgrösse nachfolgend auf eine Sollbremskraftgrösse, die einen wählbaren Anteil der bei dem Erkennen der Blockierneigung vorliegenden Bremskraftgrösse entspricht, für eine bestimmte Zeitspanne einzustellen, wobei das Erhöhen und Verringern der Bremskraftgrösse für eines der Räder (4 , 5 ; 6 , 7) durchgeführt wird, während die Bremskraftgrösse für ein anderes der Räder (5 , 4; 7 , 6) auf die Sollbremskraftgrösse eingestellt ist.

## Claims

1. Method for operating a brake system of a vehicle (1) having at least one brakable wheel (4, 5, 6, 7), wherein a braking force variable, representing a braking force, of brake device (9, 10, 11, 12) assigned to the wheel (4, 5, 6, 7) is increased during a braking process until a tendency of the wheel (4, 5, 6, 7) to lock is detected, and is then reduced to a specific value, **characterized in that** the braking force variable is subsequently set for a specific time period to a setpoint braking force variable, which corresponds to a selectable portion of the braking force variable present when the tendency to lock is detected, and wherein the increasing and reducing of the braking force variable is carried out for one of the wheels (4, 5; 6, 7), while the braking force variable for another of the wheels (5, 4; 7, 6) is set to the setpoint braking force variable.

2. Method according to Claim 1, **characterized in that** the vehicle (1) has at least two brakable wheels (4, 5; 6, 7) provided, in particular, on a common axle (2, 3).

3. Method according to one of the preceding claims, **characterized in that** the increasing and reducing of the braking force variable for the one wheel (4, 5; 6, 7) starts with a time offset or directly after the setting of the setpoint braking force variable for the other wheel (5, 4; 7, 6).

4. Method according to one of the preceding claims, **characterized in that** the increasing and reducing of the braking force variable or the one wheel (4, 5; 6, 7) is carried out even if the specific time period and/or a maximum time period are/is exceeded and/or the tendency to lock is detected and/or a corresponding request is present.

5. Method according to one of the preceding claims, **characterized in that** the tendency to lock is determined on the basis of a reference rotational speed which corresponds to the average rotational speed of the wheel (4, 5, 6, 7) and/or of at least one further wheel (4, 5, 6, 7).

6. Method according to one of the preceding claims, **characterized in that** the portion is selected in the range from 10% to 100%, preferably 25% to 75%, particularly preferably 50%.

7. Method according to one of the preceding claims, **characterized in that** the portion is increased if, when the braking force variable is increased subsequent to the setpoint braking force variable being set, it is detected that the interval between the setpoint braking force variable and the braking force variable at which the tendency to lock is detected is above a maximum value, and/or that the portion is decreased if the interval is below a minimum value.

8. Method according to one of the preceding claims, **characterized in that** the time period is selected in accordance with a desired lateral guiding force of the vehicle (1) and/or a smaller value is selected for said time period when the tendency to lock is reduced.

9. Controller of a brake system of a vehicle (1), in particular for implementing the method according to one or more of the preceding claims, wherein the brake system (8) has at least one brakable wheel (4, 5, 6, 7), and the controller is provided for increasing a braking force variable, representing a braking force, of a brake device (9, 10, 11, 12) assigned to the wheel (4, 5, 6, 7), during a braking process until a tendency of the wheel (4, 5, 6, 7) to lock is detected, and then reducing it to a specific value, **characterized in that** the controller is also provided subsequently to set the braking force variable for a specific time period to a setpoint braking force variable which corresponds to a selectable portion of the braking force variable which is present when the tendency to lock is detected, wherein the increasing and reducing of the braking force variable is carried out for one of the wheels (4, 5; 6, 7) while the braking force variable for another of the wheels (5, 4; 7, 6) is set to the setpoint braking force variable.

## Revendications

1. Procédé de conduite de l'installation de freinage d'un véhicule (1) qui présente au moins une roue (4, 5, 6, 7) apte à être freinée, et dans lequel
une grandeur de force de freinage qui représente une force de freinage d'un dispositif de freinage (9, 10, 11, 12) associé à la roue (4, 5, 6, 7) est augmentée lors d'une opération de freinage jusqu'à détection que la roue (4, 5, 6, 7) a tendance à se bloquer et est ensuite réduite à une valeur définie, **caractérisé en ce que**
la grandeur de force de freinage est ensuite réglée pendant une durée définie à une grandeur de consigne de force de freinage qui correspond à une fraction sélectionnable de la grandeur de force de freinage qui prévaut lors de la détection de la tendance au blocage,
**en ce que** l'augmentation ou la diminution de la grandeur de force de freinage sont exécutées pour l'une des roues (4, 5 ; 6, 7) pendant que la grandeur de force de freinage d'une autre des roues (5, 4 ; 7, 6) est réglée à la grandeur de consigne de force de freinage.

2. Procédé selon la revendication 1, **caractérisé en ce que** le véhicule (1) présente au moins deux roues (4, 5 ; 6, 7) freinables prévues en particulier sur un essieu (2, 3) commun.

3. Procédé selon l'une des revendications précédentes, **caractérisé en ce que** l'augmentation ou la diminution de la grandeur de force de freinage de l'une des roues (4, 5 ; 6, 7) sont décalées dans le temps ou commencent immédiatement après le réglage de la grandeur de consigne de force de freinage de l'autre des roues (5, 4 ; 7, 6).

4. Procédé selon l'une des revendications précédentes, **caractérisé en ce que** l'augmentation ou la diminution de la grandeur de force de freinage de l'une des roues (4, 5 ; 6, 7) sont également exécutées lorsque la durée définie et/ou une durée maximale sont dépassées et/ou lorsque la tendance au blocage est constatée et/ou lorsqu'une demande en ce sens existe.

5. Procédé selon l'une des revendications précédentes, **caractérisé en ce que** la tendance au blocage est définie à l'aide d'une vitesse de rotation de référence qui correspond à la vitesse moyenne de rotation de la roue (4, 5, 6, 7) et/ou d'au moins une autre roue (4, 5, 6, 7).

6. Procédé selon l'une des revendications précédentes, **caractérisé en ce que** la fraction est sélectionnée dans la plage de 10 % à 100 %, de préférence de 25 % à 75 % et de façon particulièrement préférable à 50 %.

7. Procédé selon l'une des revendications précédentes, **caractérisé en ce que** la fraction est augmentée si lors d'une augmentation de la grandeur de force de freinage qui suit le réglage de la grandeur de consigne de la force de freinage il est constaté que l'écart entre la grandeur de consigne de force de freinage et la grandeur de force de freinage à laquelle la tendance au blocage est constatée est situé au-dessus d'une valeur maximale et/ou **en ce que** la fraction est diminuée lorsque l'écart est situé en dessous d'une valeur minimale.

8. Procédé selon l'une des revendications précédentes, **caractérisé en ce que** la durée sélectionnée est plus courte selon une force souhaitée de guidage latéral du véhicule (1) et/ou lorsque la tendance au blocage diminue.

9. Appareil de commande de l'installation de freinage d'un véhicule (1), en particulier en vue de la mise en oeuvre du procédé selon l'une ou plusieurs des revendications précédentes, dans lequel l'installation de freinage (8) présente au moins une roue (4, 5, 6, 7) freinable, l'appareil de commande étant prévu pour augmenter une grandeur de force de freinage qui représente une force de freinage d'un dispositif de freinage (9, 10, 11, 12) associé à la roue (4, 5, 6, 7) lors d'une opération de freinage jusqu'à détection que la roue (4, 5, 6, 7) a tendance à se bloquer et ensuite la réduire à une valeur définie,
**caractérisé en ce que**
l'appareil de commande est en outre prévu pour ensuite régler la grandeur de force de freinage pendant une durée définie à une grandeur de consigne de force de freinage qui correspond à une fraction sélectionnable de la grandeur de force de freinage qui prévaut lors de la détection de la tendance au blocage et
**en ce que** l'augmentation ou la diminution de la grandeur de force de freinage sont exécutées pour l'une des roues (4, 5 ; 6, 7) pendant que la grandeur de force de freinage d'une autre des roues (5, 4 ; 7, 6) est réglée à la grandeur de consigne de force de freinage.
